# DEMANDE DE BREVET EUROPEEN

(11) **EP 0 724 086 A1**
(43) Date de publication de la demande: **31.07.1996**
(21) Numéro de dépôt: 96400026.9
(22) Date de dépôt: 05.01.1996
(51) Int. Cl.: F16C 39/06

(54) **Palier magnétique de basculement, voire de centrage**

(30) Priorité: 27.01.1995 FR 9500950
(71) Demandeur: AEROSPATIALE Société Nationale Industrielle, F-75781 Paris Cédex 16 (FR)
(72) Inventeur: Marroux, Olivier, F-75016 Paris (FR); Bernus, Christophe, F-75018 Paris (FR); Roland, Jean-Pierre, F-95510 Vienne en Arthies (FR)
(74) Mandataire: Rinuy, Santarelli

(57) **Abrégé**

Un palier magnétique comporte un ensemble de paires de pièces polaires (12A/12B, 13A/13B, 14A/14B) définissant, avec des paires d'entrefer (15A/15B, 16A/16B), une boucle magnétique (11) parallèlement à un axe d'actionnement (X-X) et à un axe de référence (Z-Z). Deux demi-bobinages (17A, 17B) sont disposés autour d'une portion d'un élément polaire extrême ; cette portion est, entre ces demi-bobinages, connectée à l'autre élément polaire extrême par une branche polaire de dérivation (11D) qui divisent la boucle magnétique en deux branches polaires principalement. L'application de courants différents aux demi-bobinages induit un basculement du corps mobile autour d'un axe de basculement perpendiculaire aux axes d'actionnement et de référence.

## Description

L'invention concerne un palier ou actionneur électromagnétique adapté non seulement à centrer un second corps par rapport à un premier corps selon un axe de centrage, mais aussi à commander le basculement relatif du second corps par rapport au premier corps autour d'un axe de basculement transversal à l'axe de centrage. Elle vise également un palier ou actionneur adapté à n'assurer suivant un axe d'actionnement donné, que cette fonction de commande en basculement, en pratique en combinaison avec des paliers classiques de centrage.

Ainsi qu'on le sait, les coûts de lancement d'un satellite (par exemple de l'ordre de 500 kF par kilo mis sur orbite, dans le cas d'un satellite géostationnaire) sont tels qu'ils imposent à tous les équipements embarqués, et en particulier aux Systèmes de Contrôle d'Attitude et d'Orbite (SCAO - ou AOCS comme acronyme en anglais) d'être le plus léger possible.

En pratique, un élément majeur de ces systèmes est constitué de roues cinétiques (c'est-à-dire des roues dont le moment cinétique est en moyenne non nul). Il est donc souhaitable que ces roues soient les plus légères possible.

Il est désormais bien connu d'utiliser des paliers magnétiques pour suspendre magnétiquement le rotor de telles roues vis-à-vis de son stator.

De tels paliers sont notamment décrits dans les documents US-A-4.211.452 (POUBEAU), US-A-4.470.644 (WEISSER), ou US-A-4.918.345 (VAILLANT DE GUELIS et al.) correspondant à EP-0.284.487, ou encore dans la demande de brevet français 94-06337 (MARROUX) déposée le 25 Mai 1994 incorporée par référence, ou encore dans la demande de brevet français 94-13896 (JAMAIN et al.) déposée le 21 Novembre 1994, incorporée par référence.

Les paliers magnétiques sont très couramment utilisés dans le cas de corps tournants. On distingue alors deux grandes catégories de paliers magnétiques : - les paliers magnétiques axialement actifs dans lesquels des bobinages assurent un centrage actif le long de l'axe rotation, tandis que le centrage est en pratique passif le long des axes diamétraux. Un exemple en est donné dans le document US-A-4.211.452 précité,
- les paliers magnétiques radialement actifs selon lesquels le centrage selon au moins un axe transversal à l'axe de rotation est assuré par des actionneurs magnétiques, le centrage le long de cet axe de rotation étant en pratique assuré passivement par des aimants. Des exemples en sont donnés dans les documents US-A-4.470.644 et US-A-4.918.345 précités.

Des paliers magnétiques peuvent également être utilisés dans le cas de mouvements linéaires, ainsi que cela ressort du dernier document cité.

Ces paliers sont en principe destinés à des roues à moment cinétique fixe ; lorsque l'on souhaite modifier l'orientation du moment cinétique, on associe alors à la roue cinétique une ou plusieurs roues de réaction (dont le moment cinétique peut à certains instants être nul) disposées transversalement.

Une solution alternative a été envisagée, qui consiste à rendre orientable le moment cinétique d'une roue cinétique. Le rotor de telles roues est alors monté dans un palier mécanique à deux degrés d'inclinaison, par exemple du type joint de CARDAN. On ne profite donc pas des avantages (absence de frottement notamment) d'une suspension magnétique.

Il a déjà été proposé, dans le document WO-94/07299 (BERNUS et al.) de commander des basculements de faible amplitude à l'aide de deux paliers dont l'un au moins est magnétique avec une position de consigne de centrage radial qui est modifiée en fonction des besoins. Cette solution est intéressante, mais implique l'utilisation de deux paliers.

L'invention a pour objet de pallier les inconvénients précités grâce à un palier magnétique adapté à assurer une double fonction de centrage et de commande (ou d'amortissement) en basculement, ou au moins une fonction de basculement, sur un débattement de plusieurs degrés (typiquement de 3° à 5°), tout en ayant un encombrement, une masse et une fiabilité aussi proches que possible des performances des paliers magnétiques classiques sans contrôle en basculement. Cet objectif concerne notamment, mais pas exclusivement, le cas de corps tournants (avec un centrage magnétiquement actif qui est soit radial, soit axial) ; c'est ainsi qu'il s'applique également au cas de corps en translation.

L'invention propose à cet effet un palier magnétique pour le centrage magnétiquement actif, selon au moins un axe de centrage perpendiculaire à un axe de référence, d'un second corps mobile par rapport à un premier corps, comportant au moins un ensemble de pièces polaires réparties entre les premier et second corps et définissant parallèlement à l'axe de centrage et à l'axe de référence une boucle magnétique, cet ensemble de pièces polaires étant formé le long de l'axe de centrage d'une succession de paires de pièces polaires, ces paires de pièces polaires étant, de proche en proche, portées par l'un puis par l'autre desdits corps, chaque paire étant séparée de chaque paire adjacente par une paire d'entrefers d'épaisseur variable selon l'axe de centrage, les pièces polaires ou les entrefers de chacune de ces paires étant parallèles à l'axe de centrage et disposés en regard transversalement à cet axe, les pièces polaires des paires extrêmes de cette succession étant reliées, respectivement, par des pièces polaires extrêmes transversales à l'axe de centrage en sorte de former de premier et second éléments polaires extrêmes dont le premier au moins porte un bobinage de centrage destiné à être parcouru par un courant de centrage, caractérisé en ce que deux demi-bobinages de basculement ayant chacun des bornes d'alimentation sont disposés autour d'une portion polaire de l'un des éléments polaires extrêmes, cette portion polaire étant, entre ces deux demi-bobinages, connectée magnétiquement à l'autre des éléments polaires extrêmes par une branche polaire de dérivation divisant ladite boucle magnétique en deux branches polaires principales contenant respectivement les entrefers desdites paires, ces demi-bobinages étant destinés à être parcourus par des courants de basculement en sorte de commander un basculement relatif du second corps par rapport au premier corps autour d'un axe de basculement perpendiculaire aux axes de centrage et de référence, grâce à quoi ledit palier assure une double fonction de centrage et de basculement.

En fait, pour tenir compte de ce que le palier précité peut être monté en service en sorte de ne pas exercer normalement de centrage (ce centrage étant effectué par ailleurs), il est équivalent de définir ce palier sans référence à un centrage, comme étant un palier magnétique pour la commande selon un axe d'actionnement d'un basculement autour d'au moins un axe de basculement perpendiculaire à cet axe d'actionnement et à un axe de référence, d'un second corps mobile par rapport à un premier corps, comportant au moins un ensemble de pièces polaires réparties entre les premier et second corps et définissant parallèlement à l'axe d'actionnement et à l'axe de référence une boucle magnétique, cet ensemble de pièces polaires étant formé le long de l'axe d'actionnement d'une succession de paires de pièces polaires, ces paires de pièces polaires étant, de proche en proche, portées par l'un puis par l'autre desdits corps, chaque paire étant séparée de chaque paire adjacente par une paire d'entrefers d'épaisseur variable selon l'axe d'actionnement, les pièces polaires ou les entrefers de chacune de ces paires étant parallèles à l'axe d'actionnement et disposés en regard transversalement à cet axe, les pièces polaires des paires extrêmes de cette succession étant reliées, respectivement, par des pièces polaires extrêmes transversales à l'axe d'actionnement en sorte de former de premier et second éléments polaires extrêmes, caractérisé en ce que deux demi-bobinages de basculement ayant chacun des bornes d'alimentation sont disposés autour d'une portion polaire de l'un des éléments polaires extrêmes, cette portion polaire étant, entre ces deux demi-bobinages, connectée magnétiquement à l'autre des éléments polaires extrêmes par une branche polaire de dérivation divisant ladite boucle magnétique en deux branches polaires principales contenant respectivement les entrefers desdites paires, ces demi-bobinages étant destinés à être parcourus par des courants de basculement en sorte de commander un basculement relatif du second corps par rapport au premier corps autour de l'axe de basculement.

On appréciera que l'invention enseigne ainsi de diviser, grâce à une branche polaire de dérivation, la boucle polaire magnétique des paliers classiques en deux branches polaires principales comportant des entrefers, cette branche polaire de dérivation autorisant la génération de flux magnétiques différents dans les deux branches principales.

Selon des enseignements préférés de l'invention, éventuellement combinés :
- les deux demi-bobinages de basculement sont montés sur le premier élément polaire extrême,
- les deux demi-bobinages de basculement forment conjointement le bobinage de centrage,
- les demi-bobinages de basculement sont portés par l'une des pièces polaires extrêmes,
- les demi-bobinages de basculement sont portés par l'une au moins des pièces polaires dudit élément polaire extrême qui est parallèle à l'axe de centrage,
- chacun des éléments polaires extrêmes comporte une paire de demi-bobinages de basculement,
- la branche polaire de dérivation s'étend entre les branches polaires principales et comporte autant d'entrefers que chacune de ces branches polaires principales,
- la branche polaire de dérivation s'étend par rapport à l'axe de référence, d'un même côté, de chacune des branches polaires principales,
- ce palier comporte un deuxième ensemble de pièces polaires sensiblement symétrique du premier ensemble par rapport à l'axe de référence définissant une seconde boucle magnétique séparée entre deux seconds demi-bobinages par une seconde branche polaire de dérivation en deux secondes branches polaires principales,
- chaque boucle est seulement constituée desdits éléments polaires extrêmes séparés par une unique paire d'entrefers,
- au moins un aimant permanent à aimantation parallèle à l'axe de référence est monté magnétiquement entre les deux branches polaires principales,
- cet aimant permanent est connecté magnétiquement par ses tranches aux pièces polaires parallèles du premier élément extrême, en des zones entre lesquelles ce premier élément extrême comporte au moins un entrefer statique,
- cet aimant permanent est connecté magnétiquement par ses tranches aux pièces polaires d'une paire séparée par des paires d'entrefers vis-à-vis de chacun des éléments polaires extrêmes,
- la branche polaire de dérivation s'étend entre les branches polaires principales et est traversée par ledit aimant permanent,
- la branche polaire de dérivation s'étend, par rapport à l'axe de référence, d'un même côté de chacune des branches polaires principales,
- branche polaire de dérivation s'étend entre les branches polaires principales et deux aimants permanents à aimantation parallèles à l'axe de référence sont respectivement connectés magnétiquement à cette branche polaire de dérivation et à chacune des branches polaires principales,
- lesdits deux aimants permanents ont des sens d'aimantation identiques,
- lesdits deux aimants permanents ont des sens d'aimantation opposés,
- lesdits deux aimants sont solidaires du premier élément extrême, et deux entrefers statiques sont ménagés dans ce premier élément extrême entre la branche polaire de dérivation et chacune des branches polaires principales,
- lesdits deux aimants permanents sont montés entre les pièces polaires d'une paire séparée par des paires d'entrefers vis-à-vis de chacun des éléments polaires extrêmes,
- ce palier comporte un deuxième ensemble de pièces polaires sensiblement symétrique du premier ensemble par rapport à l'axe de référence et définissant une seconde boucle magnétique divisée, entre deux seconds demi-bobinages, par une seconde branche polaire de dérivation en deux branches polaires principales, les éléments extrêmes de chaque boucle étant séparés par une seule paire d'entrefers,
- palier comporte un deuxième ensemble de pièces polaires sensiblement symétrique du premier ensemble par rapport à l'axe de référence et définissant une seconde boucle magnétique divisée, entre deux demi-bobinages, par une seconde branche polaire de dérivation en deux branches polaires principales, chaque branche polaire principale comportant deux entrefers, et les deux éléments polaires extrêmes étant solidaires l'un de l'autre,
- les éléments polaires extrêmes qui, dans chaque boucle, sont à proximité de l'axe de symétrie, sont adossés l'un à l'autre en constituant une unique pièce polaire de forme générale en I,
- cette boucle magnétique admet l'axe de référence comme axe de symétrie, le ou les aimants permanents étant disposés sur cet axe de symétrie,
- le deuxième corps est mobile en rotation par rapport au premier corps autour de l'axe de référence,
- le deuxième corps est, par rapport au premier corps, mobile en translation parallèlement à l'axe de basculement,
- le deuxième corps est mobile en rotation, par rapport au premier corps, autour de l'axe de centrage,
- l'écartement entre les entrefers des paires d'entrefers, et l'épaisseur des pièces polaires, parallèlement à l'axe de référence, augmentent avec la distance de ces entrefers et de ces pièces polaires à cet axe de référence,
- lorsque le basculement est activé selon un axe qui n'est pas nominalement un axe de centrage, il y a de préférence, soit le long d'une ligne de translation, soit autour d'un axe de rotation, une alternance d'axes de centrage ou de basculement.

Des objets, caractéristiques et avantages de l'invention ressortent de la description qui suit, donnée à titre d'exemple non limitatif, en regard des dessins annexés sur lesquels :
- la figure 1 est une vue schématique de dessous d'un palier magnétique ayant deux axes radiaux de centrage actif,
- la figure 2 est une vue schématique en coupe axiale de ce palier magnétique, selon la ligne II-II de la figure 1, représentant schématiquement les éléments intervenant dans le centrage selon un axe,
- la figure 3 est une vue agrandie de la partie gauche du palier de la figure 2, montrant leurs flux magnétiques statiques générés par les aimants,
- la figure 4 est une vue similaire à celle de la figure 3, montrant en outre les flux magnétiques dynamiques générés par les demi-bobinages pour obtenir un basculement dans le sens trigonométrique,
- la figure 5 est une autre vue similaire, correspondant à un basculement dans le sens des aiguilles d'une montre,
- la figure 6 est une vue similaire à celle de la figure 3, pour une autre configuration de la branche polaire de dérivation,
- la figure 7 est une vue similaire à celle de la figure 4,
- la figure 8 est une vue similaire à celle de la figure 5,
- la figure 9 est une première variante de réalisation du palier de la figure 2, avec des aimants uniques,
- la figure 10 est une seconde variante de réalisation, avec des demi-bobinages disposés en interne,
- la figure 11 est une troisième variante de réalisation, avec des demi-bobinages en externe et en interne,
- la figure 12 est une quatrième variante de réalisation, avec des demi-bobinages ou bobinages spécifiques pour chacune des fonctions de centrage et de basculement,
- la figure 13 est une cinquième variante de réalisation, avec des aimants disposés tête-bêche,
- la figure 14 est une sixième variante de réalisation, avec les aimants solidaires de l'un des éléments polaires extrêmes,
- la figure 15 est une vue schématique d'un deuxième mode de réalisation d'un palier selon l'invention, adapté à un centrage radial actif,
- la figure 16 est une vue schématique d'un troisième mode de réalisation d'un palier selon l'invention, adapté à un centrage radial actif sans aimants,
- la figure 17 est une vue schématique en coupe axiale d'un second mode de réalisation de palier conforme à l'invention, dans le cas où le centrage d'un rotor se fait le long de l'axe de rotation,
- la figure 18 est une variante de réalisation du palier de la figure 17,
- la figure 19 est une seconde variante de réalisation d'un palier de centrage axial actif,
- la figure 20 en est une variante de réalisation, dans le cas où la boucle magnétique est symétrique par rapport à l'axe de rotation,
- la figure 21 est une variante de la figure 1 où les axes de centrage et d'actionnement en basculement sont décalés angulairement,
- la figure 22 est une vue en coupe axiale de ce palier selon la ligne XXII-XXII,
- la figure 23 est une représentation des lignes de flux de la partie droite de la figure 22 en configuration de basculement, et
- la figure 24 est une représentation des lignes de flux de cette même partie droite, en fonctionnement en centrage.

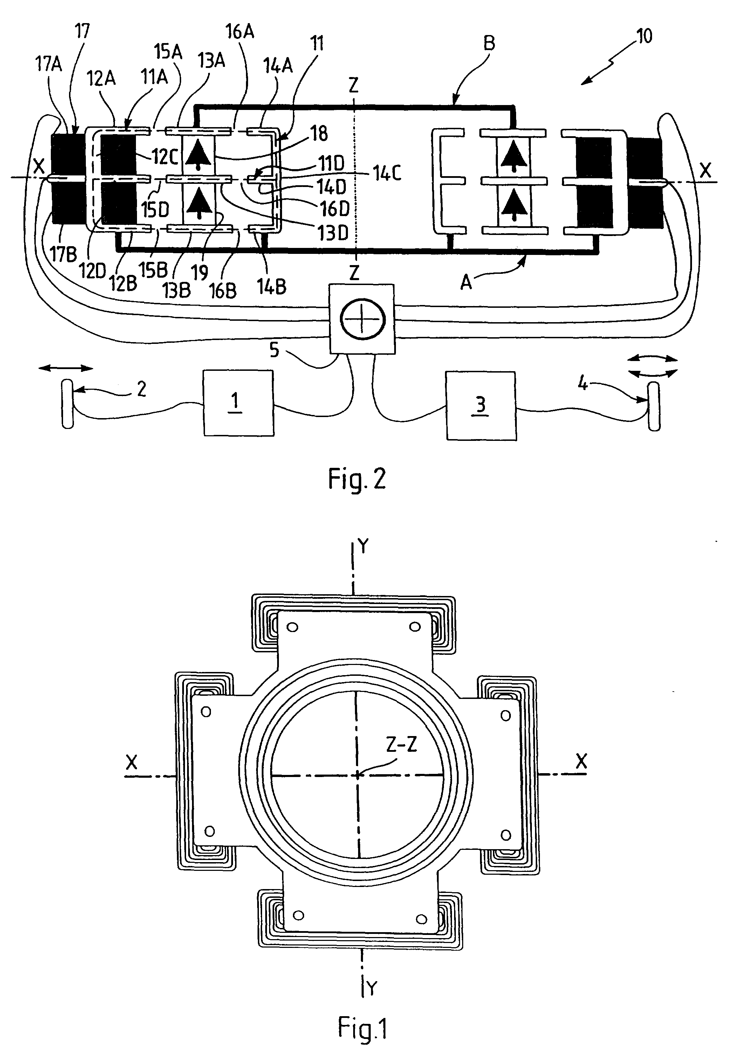

La figure 1 représente de façon schématique un palier magnétique pour la suspension magnétique d'un rotor, schématisé sous la référence B à la figure 2, tournant autour d'un axe Z-Z par rapport à un stator schématisé sous la référence A à la figure 2.

Ce palier a deux directions radiales d'actionnement, notées X-X et Y-Y. Il s'agit d'un palier 2-axes qui peut s'analyser comme étant formé d'un palier 1-axe pour chaque axe radial. C'est sur cette notion de palier 1-axe que se poursuivra la description, mais il doit être bien compris que les enseignements qui seront donnés seront également valables pour un palier 2-axes pour un corps tournant. De même, il devra être compris que les enseignements s'appliqueront de même au cas d'un corps mobile en translation (perpendiculairement au plan de la figure 2, et des figures suivantes) : il suffit en effet pour ce faire de disposer en des endroits successifs de la trajectoire du corps mobile des paliers 1-axe tels que celui de la figure 2).

De manière connue, le palier magnétique 1-axe 10 de cette figure 2 peut s'analyser comme admettant un axe de centrage actif X-X perpendiculaire à un axe de référence Z-Z. Il comporte deux ensembles de pièces polaires réparties entre le rotor et le stator et définissant chacun parallèlement aux axes X-X et Z-Z une boucle magnétique 11 (seule la boucle magnétique gauche est repérée à cette figure 2).

Cet ensemble de pièces polaires est formé le long de l'axe de centrage X-X d'une succession de paires de pièces polaires 12A/12B, 13A/13B et 14A/14B qui sont, de proche en proche, portées par l'un puis par l'autre des corps A et B (les paires 12A/12B et 14A/14B sont portées par A tandis que la paire 13A/13B est portée par B).

La paire centrale 13A/13B est séparée des paires adjacentes par deux paires d'entrefers 15A/15B et 16A/16B d'épaisseur variable selon l'axe de centrage.

Les pièces polaires et les entrefers sont parallèles à cet axe de centrage et sont, au sein de chaque paire, disposés en regard (au moins approximativement) transversalement à cet axe.

Les pièces polaires des paires extrêmes 12A/12B et 14A/14B sont reliées, respectivement, par des pièces polaires extrêmes 12C et 14C transversalement à X-X. De la sorte, les pièces 12A, 12B et 12C, ainsi que les pièces 14A, 14B et 14C forment respectivement de premier et second éléments polaires extrêmes qui ont, sur la figure 2, une forme en C. L'un au moins de ces éléments, appelé premier élément, porte un bobinage de centrage 17 destiné à être parcouru par un courant de centrage.

Ce courant de centrage est, de toute manière connue appropriée, généré par un bloc de traitement 1 recevant en entrée les signaux d'un ensemble de détection de centrage schématisé en 2, adaptée à capter la position ou la vitesse relative de A par rapport à B le long de l'axe X-X.

Selon l'invention, l'un des éléments polaires extrêmes porté par deux demi-bobinages de basculement ayant chacun des bornes d'alimentation de manière à pouvoir être parcourus par des courants de basculement différents commandés par un bloc de traitement 3 à partir d'un ensemble de détection de basculement schématisé 4.

Cet élément polaire extrême est, entre les deux demi-bobinages, connecté magnétiquement à l'autre des éléments polaires extrêmes par une branche polaire de dérivation repérée llD dans son ensemble, divisant la boucle magnétique en deux branches polaires principales repérées 11A et 11B contenant respectivement les entrefers.

Le bobinage de centrage 17 est ici constitué de deux demi-bobinages 17A et 17B et formant les demi-bobinages de basculement précités. Les demi-bobinages 17A et 17B sont montés en série et ont une borne commune d'alimentation. Ils sont donc adaptés chacun à être parcouru par la somme générée par l'élément de sommation 5 du courant de centrage défini par le bloc 1 et du courant de basculement spécifique défini par le bloc 3 pour le demi-bobinage considéré.

Les demi-bobinages 17A et 17B sont montés sur la pièce polaire extrême 12C de l'élément polaire 12 et c'est sensiblement en son milieu qu'elle est connectée à la branche polaire de dérivation 11D.

La branche polaire principale 11A est formée par les pièces polaires 12A, 13A et 14A par les entrefers 15A et 16A et la partie haute des pièces extrêmes 12C et 14C.

La branche polaire principale 11B est formée par les pièces polaires 12B, 13B et 14B, par les entrefers 15B et 16B et par la partie basse des pièces extrêmes 12C et 14C.

La branche polaire de dérivation 11D est ici disposée entre les branches polaires principales et comporte autant de pièces polaires et d'entrefers que chacune d'entre elles : elle est formée de pièces polaires 12D, 13D et 14D séparées par des entrefers 15D et 16D.

Les éléments extrêmes 12 et 14 ont ainsi une forme globale de E majuscule ; ils sont séparés par une pièce intermédiaire 13 formée des pièces polaires 13A, 13D et 13B et de deux aimants 18 et 19 à aimantations permanentes parallèles à l'axe de référence Z-Z et de même sens ; ces aimants sont connectés par leurs tranches à ces pièces polaires 13A, 13D et 13B.

Les deux boucles magnétiques de la figure 2, avec les bobinages et les aimants associés, sont sensiblement symétriques par rapport à l'axe de référence (qui, dans le cas d'un corps B tournant, est avantageusement un axe d'inertie), et par rapport à un plan (Z-Z, Y-Y) qui, dans le cas d'un corps en translation, constitue avantageusement, au moins localement, un plan d'inertie du corps.

Le bobinage 17 est ici disposé du côté externe du palier, c'est-à-dire sur l'élément polaire extrême le plus éloigné de l'axe de référence.

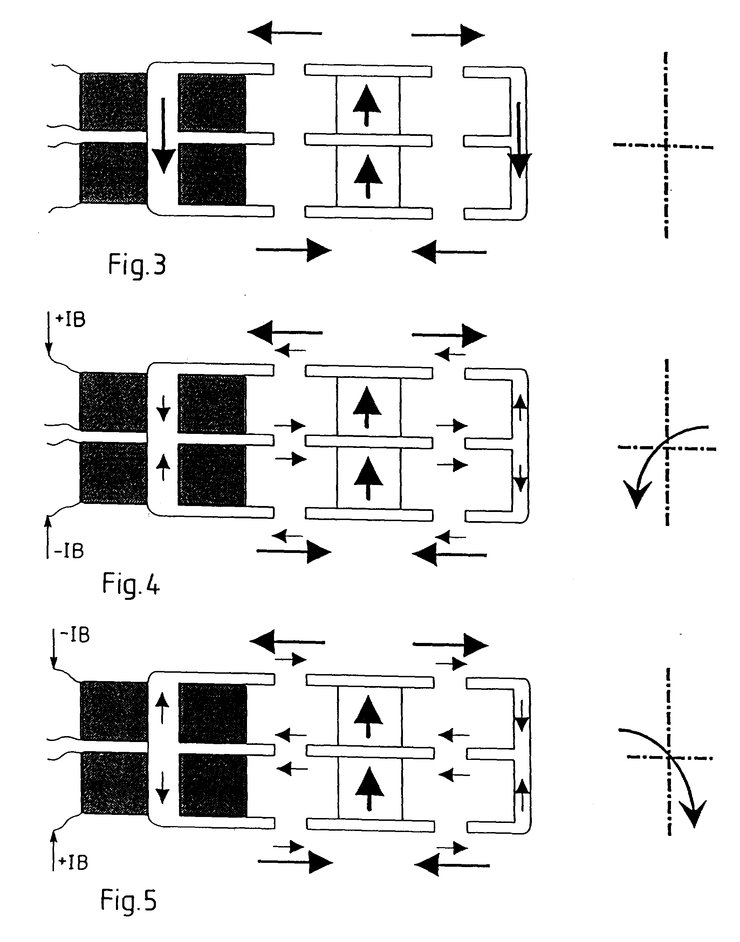

Le principe de fonctionnement du palier de la figure 2 ressort des figures 3 à 5 où n'est représentée que la partie gauche du palier.

En l'absence de tout courant circulant dans l'un quelconque des demi-bobinages, les entrefers sont traversés par des flux constants (voir les grandes flèches), égaux dans les branches 11A et 11B, générés par les aimants. Le rotor reste immobile.

Si l'on fait circuler dans les demi-bobinages des courants égaux, on commande de façon connue un déplacement d'ensemble de la pièce 13 vers la droite ou vers la gauche.

Si par contre on fait circuler dans les demi bobinages des courants de basculement de sens opposés (+ IB et -IB), on génère des flux magnétiques temporaires (voir les petites flèches) qui, grâce à la branche polaire de dérivation, se combinent différemment dans les entrefers d'une même paire d'où la génération d'un couple de basculement autour de Y-Y. Peu importe à ce propos l'orientation commune vers le haut ou vers le bas de l'aimantation des aimants.

Bien entendu l'application aux demi-bobinages de courants IC + IB, et IC - IB aura pour effet de combiner un centrage radial (déterminé par la valeur moyenne IC des deux courants) et un basculement.

Au lieu d'avoir une borne commune les demi-bobinages peuvent avoir des bornes d'alimentation complètement distinctes.

Il est à la portée de l'homme de métier, compte tenu du dimensionnement choisi pour le palier et du positionnement des capteurs élémentaires du système de détection 4, de définir les lois permettant de déterminer le courant IB à générer pour obtenir un basculement donné.

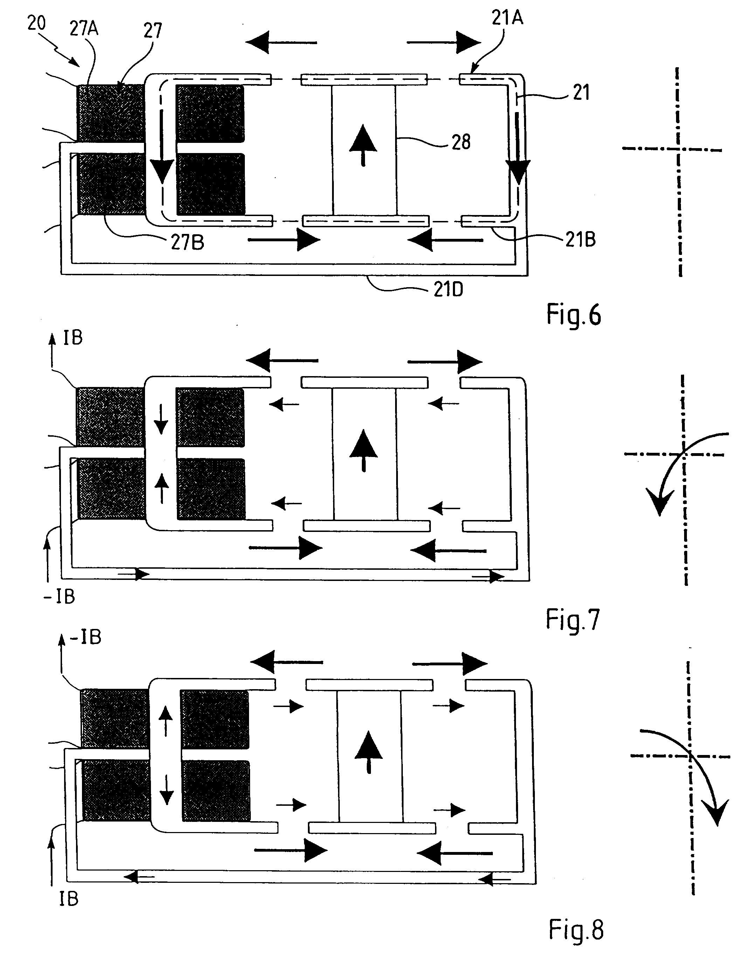

Les figures 6 à 8 décrivent de manière similaire le fonctionnement d'un palier 20 similaire au palier 10 des figures 2 à 5 sauf qu'il y a un aimant unique 28 entre les pièces polaires 23A et 23B liées au corps B et par le fait que la branche polaire de dérivation 21D se trouve à l'écart des branches principales et peut ne comporter aucun entrefer.

Les éléments de ces figures 6 à 8, qui sont similaires à ceux des figures 2 à 5, sont désignés par des signes de référence qui s'en déduisent par addition du nombre 10.

Cette configuration conduit à une plus grande longueur pour la branche polaire de dérivation, mais peut avoir pour avantage de minimiser les modifications à apporter au circuit polaire d'un palier préexistant. On peut ainsi prévoir, conformément aux enseignements de la demande de brevet français 94-13896 déposée le 21 Novembre 1994 mais non encore publiée, que la pièce polaire extrême portant les demi-bobinages soit amovible en même temps qu'une partie de la branche de dérivation, d'où une plus grande similitude des pièces constitutives de paliers de centrage avec et sans basculement.

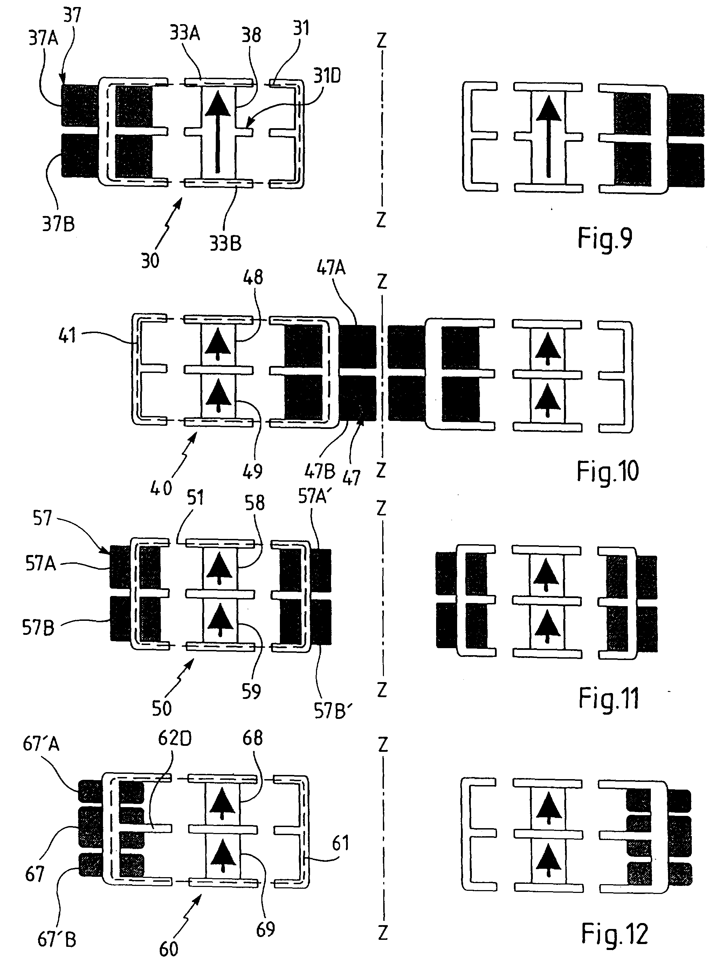

Les figures 9 à 11 présentent des variantes de réalisation du palier des figures 2 à 5.

Les éléments de ces figures 9 à 14 qui correspondent à des éléments des figures 2 à 5 sont désignés par des chiffres de référence qui s'en déduisent par addition du nombre 20, 30, 40, 50, 60 ou 70 selon le cas.

Ainsi le palier 30 de la figure 9, tirant parti des enseignements de la demande de brevet français 93-11047 (MARROUX) déposée le 16 Septembre 1993, comporte des aimants 38 coopérant par leurs tranches directement avec les pièces polaires 33A et 33B, en traversant la pièce polaire 33D ce qui conduit un très bon découplage magnétique de la branche polaire de dérivation 31D par rapport à l'aimant permanent et donc, en l'absence de commande en basculement, des performances très proches de celles d'un palier magnétique de centrage sans basculement.

Le palier 40 de la figure 10 se distingue du palier 10 par le fait que les demi-bobinages 47A et 47B servant au centrage et au basculement sont ici disposés de façon interne ce qui permet une minimisation de l'encombrement radial et/ou permet de mieux utiliser l'espace central, en fonction des contraintes d'implantation.

Le palier 50 de la figure 11 comporte des demi-bobinages sur chacun des éléments polaires extrêmes ce qui, pour des performances similaires, permet l'usage de plus petits bobinages et semble conduire à une meilleure linéarité en basculement grâce à une diminution des fuites magnétiques.

Le palier 60 comporte de la figure 12 des bobinages séparés pour les fonctions de centrage et de basculement, à savoir, un bobinage 67 de basculement (ici disposé à cheval sur le début 62D de la branche polaire de dérivation, mais qui pourrait en variante être complètement d'un côté ou de l'autre) et deux demi-bobinages de basculement 67'A et 67'B. Cela permet une totale indépendance des chaînes d'asservissement.

Les bobinages 67, 67'A et 67'B peuvent, en variante non représentée, être disposés à l'intérieur du palier et/ou être dédoublés, en partie à l'extérieur, et en partie à l'intérieur.

Selon encore une autre variante non représentée, le bobinage 67 peut être porté par un élément polaire extrême différent de celui portant les demi-bobinages 67'A et 67'B, voire même que les deux demi-bobinages soient sur des éléments polaires extrêmes différents.

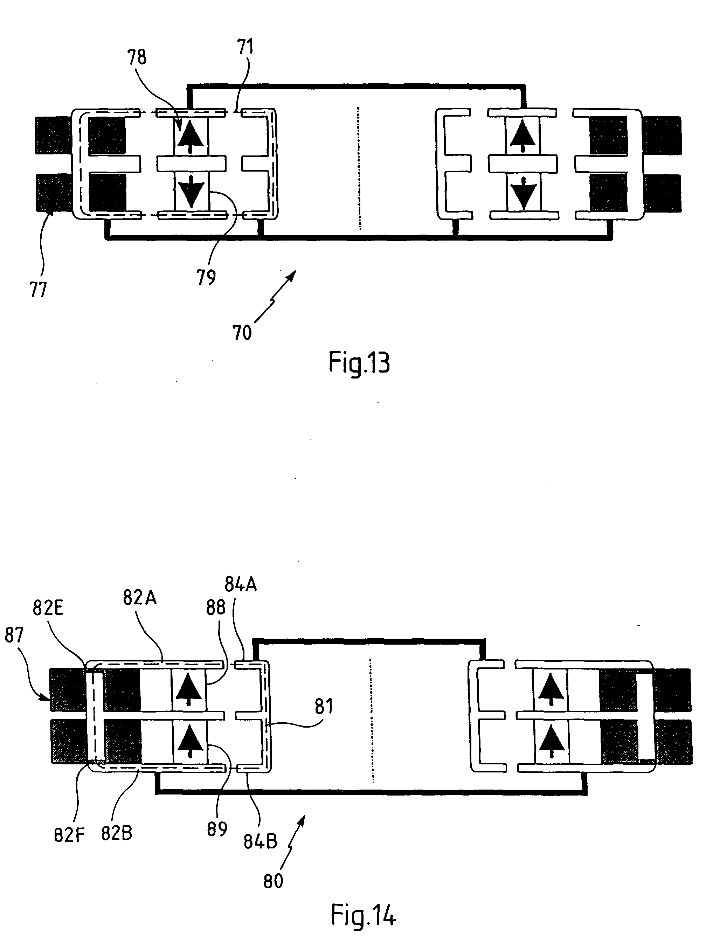

Le palier 70 de la figure 13 se distingue du palier 10 par le fait que les aimants 78 et 79 ont des sens opposés d'aimantation. Cette configuration, malgré certains inconvénients, peut par contre se révéler intéressante pour amortir des vibrations de basculement avec une grande raideur passive.

Le palier 80 de la figure 14 se distingue du palier 10 par le fait que, comme proposé en soi par le document EP-0.284.487, les aimants 88 et 89 sont solidaires de l'élément polaire extrême portant le bobinage de centrage 87. Il n'y a plus que deux pièces polaires par branche polaire, séparées par un seul entrefer (la branche de dérivation comporte en effet un entrefer, même dans la configuration déportée des figures 6 à 8). Il en résulte que le rotor peut être plus léger puisqu'il n'inclut pas les aimants permanents dont on sait qu'en pratique ils sont constitués d'un matériau de grande masse spécifique.

Des entrefers statiques 82E, 82F sont ménagés entre chaque zone de raccordement magnétique aux branches principales et la branche polaire de dérivation.

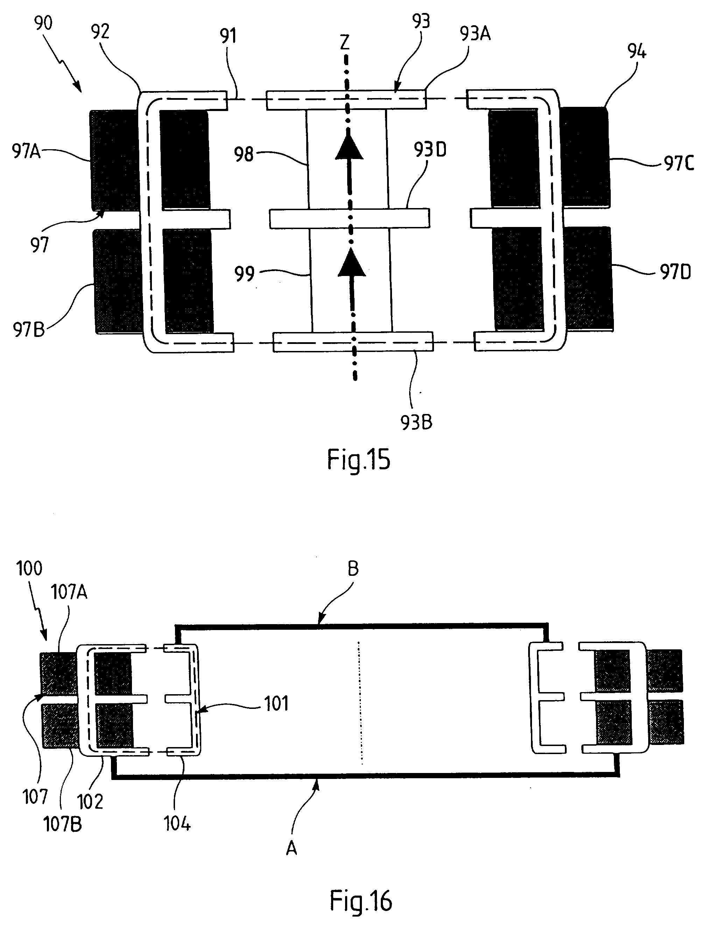

La figure 15 représente une variante de réalisation du palier 10. Le palier 90 se distingue principalement des paliers précédemment décrits par le fait qu'il comporte une unique boucle magnétique 91 symétrique par rapport à l'axe de référence Z-Z. Il comporte deux éléments polaires extrêmes 92 et 94, portant les demi-bobinages 97A, 97B, 97C et 97D de basculement, disposés de part et d'autre d'un élément central 93 comportant trois pièces polaires 93A, 93B, 93D et deux petits aimants 98 et 99 (ou en variante un unique aimant comme dans le palier 20).

Bien entendu, par analogie avec ce qui se passe dans les paliers à deux boucles précédemment décrits où les demi-bobinages doivent être alimentés de façon inverse dans les deux boucles pour garantir un couple global de basculement, les bobinages 97A et 97B d'une part, et les bobinages 97C et 97D d'autre part, doivent être alimentés de façon inverse.

Le palier 100 de la figure 16 est, comme cela a été proposé dans le document 94-06337 (MARROUX) précité, un palier sans aimant, dans lequel un flux magnétique permanent, analogue à celui de la figure 3, est généré par une composante permanente de courant traversant le bobinage de centrage. Comme celui-ci est formé des deux demi-bobinages 107A et 107B de basculement, ceux-ci reçoivent la somme d'une composante continue (simulant un aimant), d'une composante de centrage radial et d'une composante de basculement.

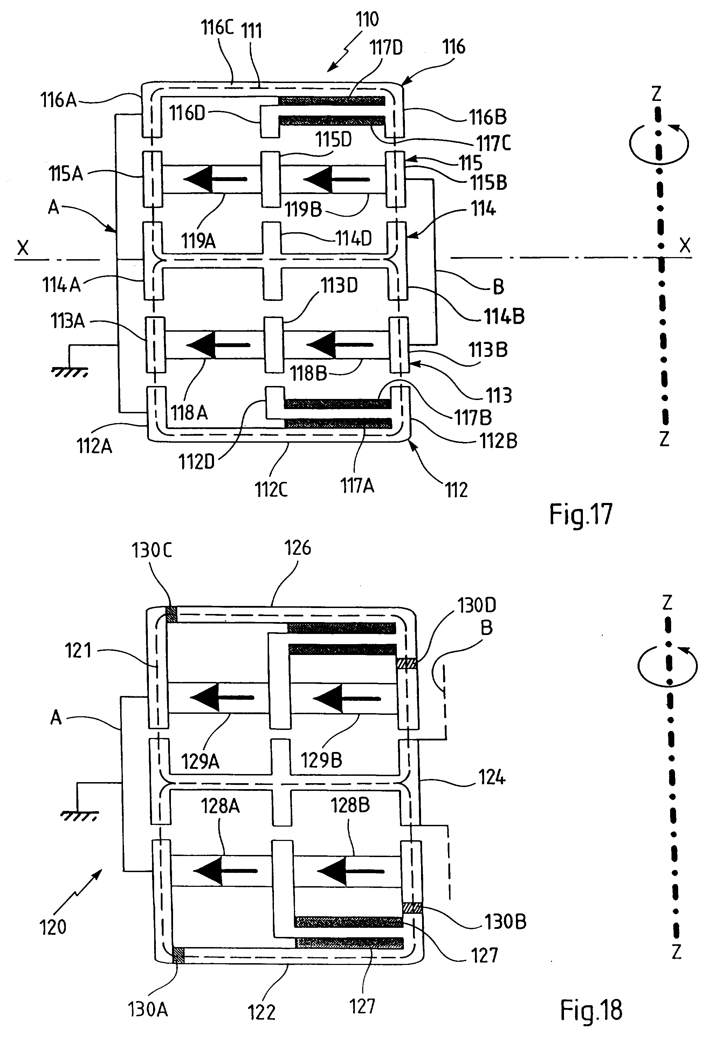

Les figures 17 à 19 représentent des paliers conformes à l'invention, adaptés au centrage axial actif de rotors. L'axe de centrage est alors l'axe Z-Z tandis que l'axe X-X est un axe de référence, au moins à un instant donné.

Le palier 110 de la figure 17 comporte deux éléments polaires extrêmes 112 et 116 et trois éléments intermédiaires 113, 114 et 115. Chacun de ces éléments comporte une paire de pièces polaires 112A/112B, 113A/113B, ... 116A/116B formant les branches polaires principales d'une double boucle magnétique et une troisième pièce polaire 112D, 113D ... 116D constituant conjointement une branche polaire de dérivation.

Ce palier comporte des demi-bobinages 117A/117B, 177C/117D portés par les éléments extrêmes.

Ces demi-bobinages entourent ici l'axe de rotation et sont donc portés, non pas par les pièces polaires extrêmes 112C et 116C, mais par les pièces polaires 112B et 116B des éléments polaires extrêmes, c'est-à-dire par les pièces polaires les plus proches de l'axe. C'est entre ces demi-bobinages que se raccorde la branche polaire de dérivation.

Des petits aimants 118A et 118B, 199A et 119B sont disposés entre les pièces polaires des éléments 113 et 115 solidaires du rotor ; ils ont des aimantation de même sens.

L'élément central 114 est ferromagnétique et permet que l'ensemble des pièces de la figure 17 forme deux boucles tangentes. Cet élément central 114 peut s'analyser comme étant formé de deux demi-éléments à section en E accolés deux à deux.

Le palier 120 de la figure 18 se distingue par le fait que, par analogie à la figure 14, les aimants 128A/128B et 1291/129B sont solidaires des éléments polaires extrêmes 122 et 126 tandis que seul l'élément central 124 est solidaire du rotor, ce qui correspond à une très faible masse embarquée sur ledit rotor. Des entrefers statiques 130A, 130B, 130C et 130D sont ménagés entre chaque zone de raccordement magnétique des aimants aux branches principales et la branche polaire de dérivation.

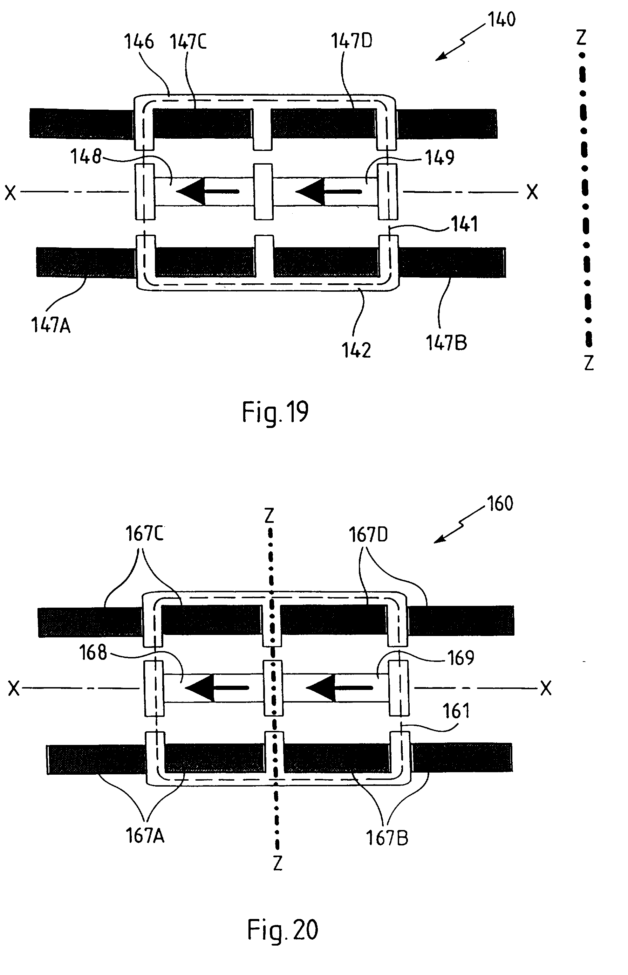

Le palier 140 de la figure 19 comporte une boucle magnétique unique, avec deux éléments polaires extrêmes 142 et 146 séparés par un élément 114, lié au rotor, formé de pièces polaires séparées par des aimants 148 et 149. Les pièces polaires des éléments polaires extrêmes sont chacune entourée par un demi-bobinage 147A/147B, 147C/147D.

Le palier 160 de la figure 20 se distingue du palier de la figure 19 par le fait que la branche polaire de dérivation est alignée sur l'axe de centrage Z-Z.

Bien entendu les figures 17 à 20 peuvent aussi se lire en prenant l'axe Z-Z non plus comme un axe de rotation, mais comme un simple axe perpendiculaire aux axes X-X et Y-Y, cet axe Y-Y définissant alors une direction de translation.

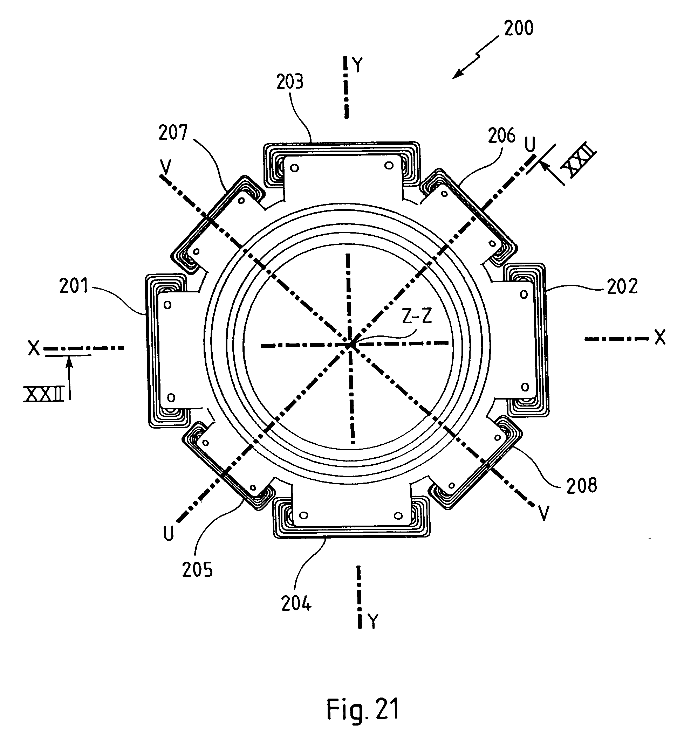

La figure 21 est une vue de dessus d'une variante de réalisation du palier de la figure 1 ; le palier 200 qui est représenté comporte deux axes X-X et Y-Y de centrage radial actif et deux axes U-U et V-V d'actionnement en basculement, alternant avec des axes de centrage radial actif autour de l'axe Z-Z, en étant de préférence disposés à 45° vis-à-vis de ces derniers.

Ce palier peut s'analyser comme étant formé de quatre paliers 1-axe (c'est-à-dire à un axe d'actionnement).

Le long des axes de centrage radial actif ce palier 200 comporte des paliers 1-axe classiques, tandis que des coupes de ce palier selon les axes de basculement visualisent des paliers 1-axe conformes à la figure 2, à ceci près que seuls des courants de basculement sont appliqués aux demi-bobinages (références 205, 206, 207 et 208) et que les courants de centrage actif sont exclusivement appliqués aux bobinages des paliers de central radial actif (références 201, 202, 203 et 204). Il y a alors, en raison du montage des paliers, un découplage entre les fonctions de centrage radial actif et de commande en basculement ; les bobinages 205 à 208 peuvent toutefois être alimentés pour le centrage radial actif selon les axes U-U ou V-V en cas de défaillance des paliers selon les axes X-X et Z-Z.

Bien entendu la conception des paliers 1-axe de centrage (classique) doit être compatible avec celle des paliers 1-axe de commande en basculement (les éléments portés par le rotor doivent être portés par une ou plusieurs couronnes et pouvoir coopérer alternativement de la même manière, au cours de la rotation, avec les autres éléments des paliers 1-axe de centrage radial actif, et des paliers 1-axe de commande en basculement.

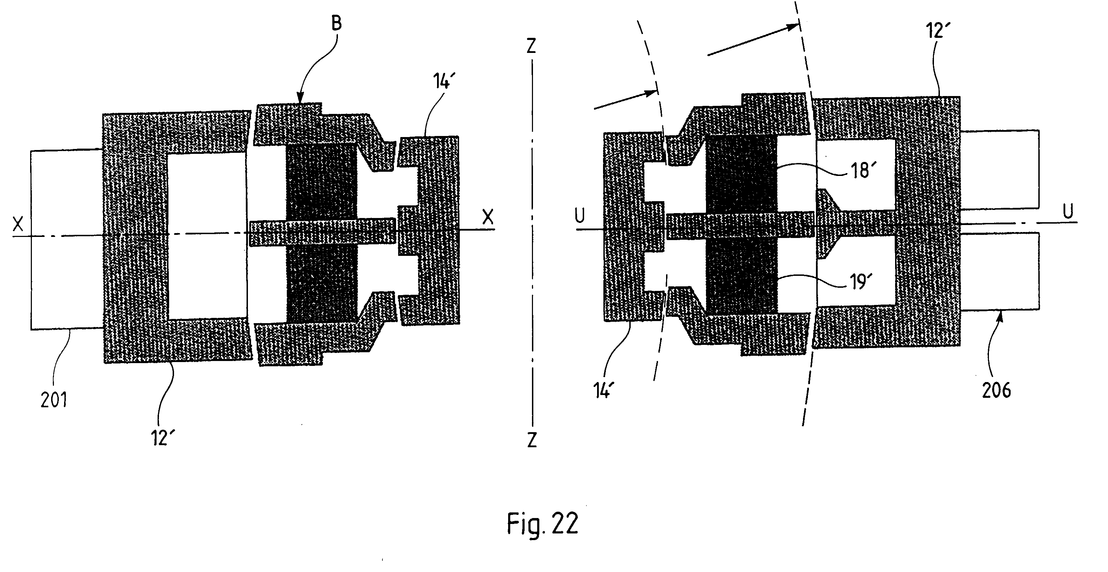

La figure 22 montre le palier 200 en coupe selon la ligne brisée XXII-XXII de la figure 21 : la partie gauche correspond à la fonction de centrage tandis que la partie droite correspond à la fonction basculement. La partie rotorique est bien sûr la même des deux côtés ; il en est ici de même de la partie statorique interne 14' ; par contre l'élément polaire 12' de la partie gauche n'a qu'une simple section en C.

On peut noter que, pour conserver une bonne efficacité en configuration de basculement important, aussi bien en centrage qu'en basculement, l'écartement entre les entrefers, parallèlement à Z-Z, et/ou l'épaisseur des pièces polaires augmentent avantageusement avec leur distance à l'axe Z-Z. De manière également préférée, les entrefers sont légèrement inclinés par rapport à Z-Z tandis que les tranches des pièces polaires qui les définissent sont situées approximativement sur une surface courbe dont la concavité est tournée vers l'axe Z-Z. De manière également préférée, la pièce polaire centrale de l'élément polaire extrême 12" le plus éloigné de l'axe Z-Z est évasée en son extrémité.

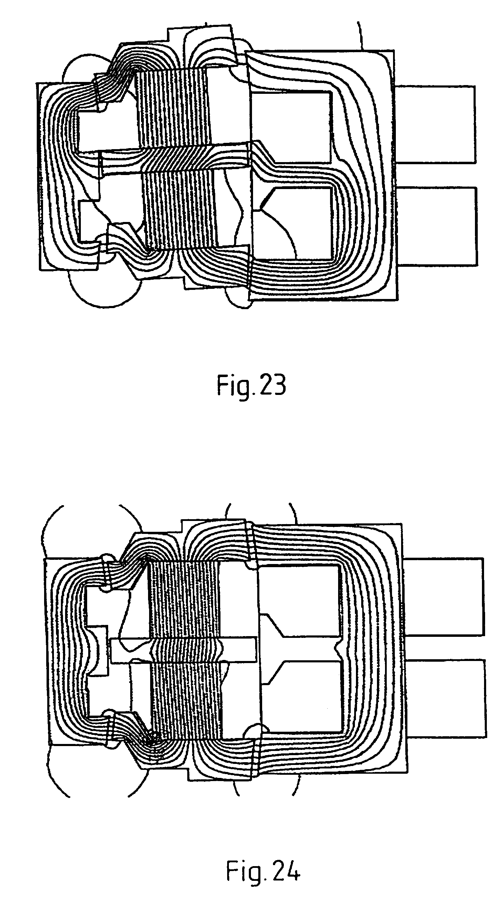

La figure 23 donne un exemple de circulation des lignes de flux dans la partie droite du palier des figures 21 et 22 en configuration de basculement important. Compte tenu de ce que les aimants 18' et 19' sont tous connectés magnétiquement à la branche polaire de dérivation, on comprend que les lignes de flux qui circulent suivant cette branche n'empruntent que la partie droite, ou que la partie gauche de cette branche par rapport aux aimants. Comme indiqué ci-dessus, un fonctionnement en centrage seul est possible (figure 24) auquel cas aucune ligne de flux ne circule selon la branche polaire de dérivation.

Cette distinction entre axes de centrage et axes de commande en basculement peut bien sûr se généraliser au cas de corps en translation.

Dans le cas d'une telle dissociation des fonctions, il faut bien comprendre que ce qui a été précisé à propos des figures 1 à 20 reste valable à ceci près qu'il n'y a plus, en régime nominal, de composante de courant destinée au centrage.

Il va de soi que la description qui précède n'a été proposée qu'à titre d'exemple non limitatif et que de nombreuses variantes peuvent être proposées par l'homme de l'art sans sortir du cadre de l'invention.

On appréciera que, dans le cas où le dispositif conforme à l'invention est implanté en sorte d'avoir une consigne de basculement constante (par exemple nulle), ce dispositif assure un amortissement et une stabilisation en basculement, ce qui permet d'obtenir, avec un seul palier, une bonne raideur en basculement.

## Revendications

1. Palier magnétique pour le centrage magnétiquement actif, selon au moins un axe de centrage (X-X, Z-Z) perpendiculaire à un axe de référence, d'un second corps mobile par rapport à un premier corps, comportant au moins un ensemble de pièces polaires réparties entre les premier et second corps et définissant parallèlement à l'axe de centrage et à l'axe de référence une boucle magnétique (11, 21, 31, 41, 51, 61, 71, 81, 91, 101, 111, 121, 141, 161), cet ensemble de pièces polaires étant formé le long de l'axe de centrage d'une succession de paires de pièces polaires, ces paires de pièces polaires étant, de proche en proche, portées par l'un puis par l'autre desdits corps, chaque paire étant séparée de chaque paire adjacente par une paire d'entrefers d'épaisseur variable selon l'axe de centrage, les pièces polaires ou les entrefers de chacune de ces paires étant parallèles à l'axe de centrage et disposés en regard transversalement à cet axe, les pièces polaires des paires extrêmes de cette succession étant reliées, respectivement, par des pièces polaires extrêmes transversales à l'axe de centrage en sorte de former de premier et second éléments polaires extrêmes (12..., 14...) dont le premier au moins porte un bobinage de centrage (17, 27, 37, 47, 57, 67, 77, 87, 97, 107, 117, 127, 147, 167) destiné à être parcouru par un courant de centrage,
caractérisé en ce que deux demi-bobinages de basculement (17A, 17B ; 27A, 27B ; 37A, 37B ) ayant chacun des bornes d'alimentation sont disposés autour d'une portion polaire de l'un des éléments polaires extrêmes, cette portion polaire étant, entre ces deux demi-bobinages, connectée magnétiquement à l'autre des éléments polaires extrêmes par une branche polaire de dérivation (11D, 21D, 31D, ....) divisant ladite boucle magnétique en deux branches polaires principales contenant respectivement les entrefers desdites paires, ces demi-bobinages étant destinés à être parcourus par des courants de basculement en sorte de commander un basculement relatif du second corps par rapport au premier corps autour d'un axe de basculement perpendiculaire aux axes de centrage et de référence, grâce à quoi ledit palier assure une double fonction de centrage et de basculement.

2. Palier magnétique selon la revendication 1, caractérisé en ce que les deux demi-bobinages de basculement sont montés sur le premier élément polaire extrême.

3. Palier magnétique selon la revendication 2, caractérisé en ce que les deux demi-bobinages de basculement forment conjointement le bobinage de centrage.

4. Palier magnétique selon l'une quelconque des revendications 1 à 3, caractérisé en ce que les demi-bobinages de basculement sont portés par l'une des pièces polaires extrêmes.

5. Palier magnétique selon l'une quelconque des revendications 1 à 3, caractérisé en ce que les demi-bobinages de basculement (117A-117D ; 127 ; 147A-147D ; 167A-167D) sont portés par l'une au moins des pièces polaires dudit élément polaire extrême qui est parallèle à l'axe de centrage.

6. Palier magnétique selon l'une quelconque des revendications 1 à 5, caractérisé en ce que chacun des éléments polaires extrêmes comporte une paire de demi-bobinages de basculement.

7. Palier magnétique selon l'une quelconque des revendications 1 à 6, caractérisé en ce que la branche polaire de dérivation s'étend entre les branches polaires principales et comporte autant d'entrefers que chacune de ces branches polaires principales.

8. Palier magnétique selon l'une quelconque des revendications 1 à 6, caractérisé en ce que la branche polaire de dérivation (21D)s'étend par rapport à l'axe de référence, d'un même côté, de chacune des branches polaires principales.

9. Palier magnétique selon l'une quelconque des revendications 1 à 8, caractérisé en ce que ce palier (10, 20, 30, 40, 50, 60, 70, 80, 100, 110, 120, 140) comporte un deuxième ensemble de pièces polaires sensiblement symétrique du premier ensemble par rapport à l'axe de référence définissant une seconde boucle magnétique séparée entre deux seconds demi-bobinages par une seconde branche polaire de dérivation en deux secondes branches polaires principales.

10. Palier magnétique selon la revendication 9, caractérisé en ce que chaque boucle est seulement constituée desdits éléments polaires extrêmes (82, 84, 102, 104, 122, 126) séparés par une unique paire d'entrefers, sans qu'il y ait d'aimants permanents.

11. Palier magnétique selon l'une quelconque des revendications 1 à 6, caractérisé en ce qu'au moins un aimant permanent à aimantation parallèle à l'axe de référence (18, 19, 28, 38, ...) est monté magnétiquement entre les deux branches polaires principales.

12. Palier magnétique selon la revendication 11, caractérisé en ce que cet aimant permanent est connecté magnétiquement par ses tranches aux pièces polaires parallèles du premier élément extrême (82, 122), en des zones entre lesquelles ce premier élément extrême comporte au moins un entrefer statique (82E, 82F, 130A, 130B, 130C, 130D).

13. Palier magnétique selon la revendication 11, caractérisé en ce que cet aimant permanent est connecté magnétiquement par ses tranches aux pièces polaires d'une paire séparée par des paires d'entrefers vis-à-vis de chacun des éléments polaires extrêmes.

14. Palier magnétique selon la revendication 12 ou la revendication 13, caractérisé en ce que la branche polaire de dérivation s'étend entre les branches polaires principales et est traversée par ledit aimant permanent (38).

15. Palier magnétique selon la revendication 12 ou la revendication 13, caractérisé en ce que la branche polaire de dérivation (21D) s'étend, par rapport à l'axe de référence, d'un même côté de chacune des branches polaires principales.

16. Palier magnétique selon la revendication 11, caractérisé en ce que la branche polaire de dérivation s'étend entre les branches polaires principales et deux aimants permanents à aimantation parallèles à l'axe de référence (18, 19, 48, 49, 68, 69, 78, 79, 88, 89, 98, 99, 118A ... 119B, ....) sont respectivement connectés magnétiquement à cette branche polaire de dérivation et à chacune des branches polaires principales.

17. Palier magnétique selon la revendication 16, caractérisé en ce que lesdits deux aimants permanents ont des sens d'aimantation identiques.

18. Palier magnétique selon la revendication 16, caractérisé en ce que lesdits deux aimants permanents (78, 79) ont des sens d'aimantation opposés.

19. Palier magnétique selon la revendication 16, caractérisé en ce que lesdits deux aimants (88, 89, 128A, 128B, 129A, 129B) sont solidaires du premier élément extrême, et deux entrefers statiques (82E, 82F, 130A, 130B, 130C, 130D) sont ménagés dans ce premier élément extrême entre la branche polaire de dérivation et chacune des branches polaires principales.

20. Palier magnétique selon la revendication 16, caractérisé en ce que lesdits deux aimants permanents (18, 19, 48, 49, 58, 59, 68, 69, 78, 79, 98, 99, 118A-119-B, 148, 149, 168, 169) sont montés entre les pièces polaires d'une paire séparée par des paires d'entrefers vis-à-vis de chacun des éléments polaires extrêmes.

21. Palier magnétique selon la revendication 12 ou la revendication 19, caractérisé en ce que ce palier (80, 100) comporte un deuxième ensemble de pièces polaires sensiblement symétrique du premier ensemble par rapport à l'axe de référence et définissant une seconde boucle magnétique divisée, entre deux seconds demi-bobinages, par une seconde branche polaire de dérivation en deux branches polaires principales, les éléments extrêmes de chaque boucle étant séparés par une seule paire d'entrefers.

22. Palier magnétique selon la revendication 13 ou 20, caractérisé en ce que ce palier (10, 20, 30, 40, 50, 60, 70, 110) comporte un deuxième ensemble de pièces polaires sensiblement symétrique du premier ensemble par rapport à l'axe de référence et définissant une seconde boucle magnétique divisée, entre deux demi-bobinages, par une seconde branche polaire de dérivation en deux branches polaires principales, chaque branche polaire principale comportant deux entrefers, et les deux éléments polaires extrêmes étant solidaires l'un de l'autre.

23. Palier magnétique selon la revendication 21 ou la revendication 22, caractérisé en ce que les éléments polaires extrêmes qui, dans chaque boucle, sont à proximité de l'axe de symétrie, sont adossés l'un à l'autre en constituant une unique pièce polaire de forme générale en I (114).

24. Palier magnétique selon la revendication 13 ou la revendication 20, caractérisé en ce que cette boucle magnétique admet l'axe de référence comme axe de symétrie, le ou les aimants permanents étant disposés sur cet axe de symétrie.

25. Palier magnétique selon l'une quelconque des revendications 1 à 24, caractérisé en ce que le deuxième corps est mobile en rotation par rapport au premier corps autour de l'axe de référence.

26. Palier magnétique selon l'une quelconque des revendications 1 à 24, caractérisé en ce que le deuxième corps est, par rapport au premier corps, mobile en translation parallèlement à l'axe de basculement.

27. Palier magnétique selon l'une quelconque des revendications 1 à 24, caractérisé en ce que le deuxième corps est mobile en rotation, par rapport au premier corps, autour de l'axe de centrage.

28. Palier magnétique pour la commande selon un axe d'actionnement d'un basculement autour d'au moins un axe de basculement (Y-Y) perpendiculaire à cet axe d'actionnement et à un axe de référence (Z-Z), d'un second corps (B) mobile par rapport à un premier corps (A), comportant au moins un ensemble de pièces polaires réparties entre les premier et second corps et définissant parallèlement à l'axe d'actionnement et à l'axe de référence une boucle magnétique (11, 21, 31, 41, 51, 61, 71, 81, 91, 101, 111, 121, 141, 161), cet ensemble de pièces polaires étant formé le long de l'axe d'actionnement d'une succession de paires de pièces polaires, ces paires de pièces polaires étant, de proche en proche, portées par l'un puis par l'autre desdits corps, chaque paire étant séparée de chaque paire adjacente par une paire d'entrefers d'épaisseur variable selon l'axe d'actionnement, les pièces polaires ou les entrefers de chacune de ces paires étant parallèles à l'axe d'actionnement et disposés en regard transversalement à cet axe, les pièces polaires des paires extrêmes de cette succession étant reliées, respectivement, par des pièces polaires extrêmes transversales à l'axe d'actionnement en sorte de former de premier et second éléments polaires extrêmes,
caractérisé en ce que deux demi-bobinages de basculement ayant chacun des bornes d'alimentation sont disposés autour d'une portion polaire de l'un des éléments polaires extrêmes, cette portion polaire étant, entre ces deux demi-bobinages, connectée magnétiquement à l'autre des éléments polaires extrêmes par une branche polaire de dérivation divisant ladite boucle magnétique en deux branches polaires principales contenant respectivement les entrefers desdites paires, ces demi-bobinages étant destinés à être parcourus par des courants de basculement en sorte de commander un basculement relatif du second corps par rapport au premier corps autour de l'axe de basculement.

29. Palier magnétique selon la revendication 28, comportant en outre au moins un axe de centrage (X-X) perpendiculaire à l'axe de référence et un actionneur magnétique adapté à centrer le second corps par rapport au premier corps selon cet axe de centrage.

30. Palier magnétique selon la revendication 28 ou la revendication 30, caractérisé en ce que l'axe de référence est un axe de rotation et ce palier a deux axes de centrage radial perpendiculaires (X-X, Y-Y) alternant avec deux axes d'actionnement en basculement (U-U, V-V).

31. Palier magnétique selon l'une quelconque des revendications 1 à 30, caractérisé en ce que l'écartement entre les entrefers des paires d'entrefers, et l'épaisseur des pièces polaires, parallèlement à l'axe de référence, augmentent avec la distance de ces entrefers et de ces pièces polaires à cet axe de référence.

32. Palier magnétique selon la revendication 28, caractérisé en ce qu'il y a une alternance d'axes de centrage et d'axes d'actionnement en basculement.
